# EUROPÄISCHE PATENTSCHRIFT

(11) **EP 1 618 296 B1**
(45) Veröffentlichungstag und Bekanntmachung des Hinweises auf die Patenterteilung: **07.03.2007**
(21) Anmeldenummer: 04804951.4
(22) Anmeldetag: 20.12.2004
(51) Int. Cl.: F02D 41/40, F02D 41/38

(54) **VERFAHREN ZUR ERMITTLUNG DER BENÖTIGTEN AKTORENERGIE FÜR DIE VERSCHIEDENEN EINSPRITZARTEN EINES AKTORS EINER BRENNKRAFTMASCHINE**
METHOD FOR DETERMINING THE ACTUATOR ENERGY REQUIRED FOR THE DIFFERENT INJECTION TYPES OF AN ACTUATOR OF AN INTERNAL COMBUSTION ENGINE
PROCEDE POUR DETERMINER L'ENERGIE REQUISE PAR L'ACTIONNEUR D'UN MOTEUR A COMBUSTION INTERNE POUR LES DIFFERENTS TYPES D'INJECTION

(30) Priorität: 10.02.2004 DE 102004006558
(43) Veröffentlichungstag der Anmeldung: 25.01.2006
(73) Patentinhaber: SIEMENS AKTIENGESELLSCHAFT, 80333 München (DE)
(72) Erfinder: DIETL, Roland, 94315 Straubing (DE); RABL, Hans, Peter, 93309 Kelheim (DE)
(86) Internationale Anmeldenummer: PCT/EP2004/053615
(87) Internationale Veröffentlichungsnummer: WO 2005/080778

(56) Entgegenhaltungen:
- EP-A- 1 318 288
- EP-A- 1 344 923
- US-A1- 2003 066 516
- US-B1- 6 311 669
- US-B1- 6 491 027
- PATENT ABSTRACTS OF JAPAN Bd. 1998, Nr. 13, 30. November 1998 (1998-11-30) & JP 10 205383 A (ISUZU MOTORS LTD), 4. August 1998 (1998-08-04)
- PATENT ABSTRACTS OF JAPAN Bd. 016, Nr. 446 (M-1311), 17. September 1992 (1992-09-17) & JP 04 153530 A (TOYOTA MOTOR CORP; others: 01), 27. Mai 1992 (1992-05-27)

## Beschreibung

Die Erfindung betrifft ein Verfahren zur Ermittlung der benötigten Aktorenergie für die verschiedenen Einspritzarten eines Aktors einer Brennkraftmaschine nach dem Oberbegriff des Anspruchs 1.

Bei einem solchen Verfahren sollen Unterschiede in der Einspritzmenge zwischen den Zylindern erkannt und gegebenenfalls adaptiert werden. Gerade für das Erreichen kleiner Einspritzmengen, insbesondere von Voreinspritzmengen, die im Bereich von wenigen Milligramm liegen, ist eine Ermittlung der Aktorenergie entscheidend für die Einhaltung der Abgasemissionen. Bei der Gleichstellung von Injektoren mittels des Aktorsignals müssen stationäre Betriebspunkte in Abhängigkeit vom Einspritzdruck mehrere Sekunden lang (3 bis 4 Sekunden) gehalten werden, um die Aktorenergie der Haupteinspritzung ermitteln zu können. Bei einer aktiven Regelung wird die Zeit zwischen der Ansteuerung des Injektors und des Aktorsignals aller Injektoren auf einen im Kennfeld gespeicherten Wert eingestellt. Da zur sicheren Auswertung eines Aktorsignals größere Einspritzmengen erforderlich sind, kann zur Ermittlung der Aktorenergie nur die Haupteinspritzung herangezogen werden. Diese Energie für die Haupteinspritzung dient als Basis für die Energie der Vor- und Nacheinspritzung.

Es hat sich jedoch herausgestellt, dass die Voreinspritzung lokale Druckschwankungen in der Injektorzulaufleitung erzeugt (siehe z.B. das Dokument US 6,311,669 B1). Diese lokalen Druckschwankungen können nicht vom Druckmesser im Rail erfasst werden, so dass der Regelung ein konstanter Druck vorgetäuscht wird. Diese lokalen Druckschwankungen haben einen wesentlichen Einfluss auf das Öffnungsverhalten des Injektors und somit auf alle nachfolgenden Einspritzungen. Somit zeigt das Aktorsignal der Haupteinspritzung eine deutliche Abhängigkeit vom Separationswinkel zwischen der Vor- und Haupteinspritzung. Erfolgt die Haupteinspritzung beispielsweise bei einem "Druckmaximum", so wird aufgrund des lokal höheren Drucks die Nadel dieses Injektors schneller geöffnet. Dies hat zur Folge, dass das Aktorsignal zu einem früheren Zeitpunkt erzeugt wird. Dies führt dazu, dass die Regelung die Aktorenergie für den entsprechenden Injektor reduziert, um die Zeit zwischen dem Beginn der Ansteuerung und dem Erzeugen des Aktorsignals auf den im Kennfeld hinterlegten Wert einzustellen versucht. Zwar ist die Energieeinstellung für die Haupteinspritzung korrekt, jedoch erhält die davon abhängige Voreinspritzung zu wenig Energie.

Somit liegt der Erfindung die Aufgabe, zugrunde, ein Verfahren vorzustellen, das es ermöglicht, zuverlässig die Aktorenergie für Vor- und Haupteinspritzung zu bestimmen.

Die Aufgabe der Erfindung wird durch die Merkmale des Anspruchs 1 gelöst. Gegenstand der abhängigen Ansprüche betreffen vorteilhafte Ausgestaltungen des erfindungsgemäßen Verfahrens.

Bei dem erfindungsgemäßen Verfahren zur Ermittlung der benötigten Aktorenergie für die verschiedenen Einspritzarten eines Aktors einer Brennkraftmaschine wird der Aktor derart mit einem Ansteuerungssignal beaufschlagt, dass dieser ein Aktorsignal erzeugt. Dabei wird ein Einspritzparameter der Brennkraftmaschine derart eingestellt, dass das Aktorsignal zu einem bestimmten hinterlegten Zeitpunkt erzeugt wird. Zunächst wird die im Verbrennungszyklus erste Einspritzart abgeschaltet, um dessen Aktorenergie aus der zweiten Einspritzart zu bestimmen. Dies ist insbesondere vorteilhaft, da die von der ersten Einspritzart erzeugten lokalen Druckschwankungen eliminiert werden. Im Verbrennungstakt einer Brennkraftmaschine, werden insbesondere bei Common-Rail-Dieselmotoren mehrere Einspritzungen vorgenommen. Zur Reduzierung von Abgasemissionen und Reduzierung der Geräuschemissionen wird zuerst eine Voreinspritzung vorgenommen, die durch eine kleine Einspritzmenge die Verbrennung auslöst. Daran anschließend wird dem Prozess die restliche Dieselmenge während der Haupteinspritzung zugeführt.

Als besonders vorteilhaft hat es sich erwiesen, dass die erste Einspritzart wieder eingeschaltet wird, nachdem dessen Aktorenergie bestimmt wurde. Nun kann die für die zweite Einspritzungsart nötige Aktorenergie bestimmt werden. Die von der ersten Einspritzart ausgelösten lokalen Druckschwankungen bewirken, dass die Nadeln der verschiedenen Injektoren unterschiedlich schnell öffnen und dementsprechend unterschiedliche Aktorenergien benötigen.

Als sehr vorteilhaft hat es sich erwiesen, das Ansteuersignal zum ersten Zeitpunkt (Einspritzbeginn) an den einen Injektor anzulegen und dass dabei das Aktorsignal nach einer bestimmten Zeit bei einem zweiten Zeitpunkt erzeugt wird. So ist bei einer Brennkraftmaschine mit mehreren Injektoren die Differenz der beiden Zeitpunkte (Einspritzbeginn und Aktorsignal) eines Injektors gleich groß wie die jeweiligen Differenz der beiden Zeitpunkte eines anderen Injektors. Mit dieser Maßnahme lassen sich alle Injektoren gleichstellen, das heißt, dass die Injektoren für jede Einspritzart die gleiche Kraftstoffmenge einspritzen.

Weitere vorteilhafte Ausgestaltungen der Erfindung sind in den übrigen abhängigen Ansprüchen angegeben.

Die Erfindung wird nachfolgend unter Bezugnahme auf die schematische Zeichnung beispielhaft erläutert. Dabei zeigen:

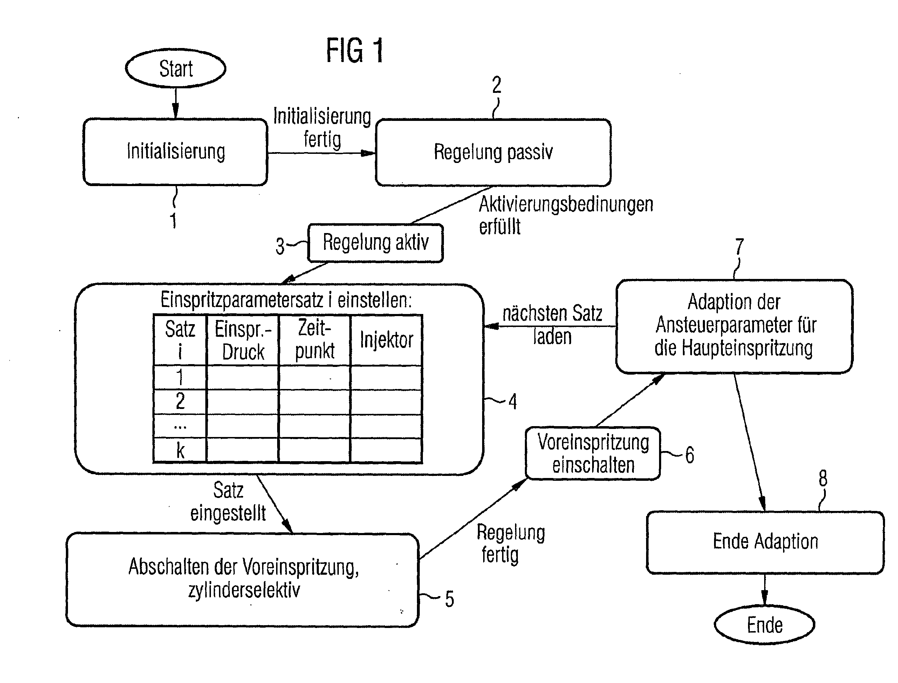

- Figur 1: ein Ablaufdiagramm der jeweiligen Aktorenergien der einzelnen Einspritzarten,
- Figur 2A: den zeitlichen Verlauf des Ansteuersignals,
- Figur 2B: den zeitlichen Verlauf der lokalen Druckschwankung in der Injektorzulaufleitung,
- Figur 2C: den zeitlichen Verlauf des Nadelhubs.

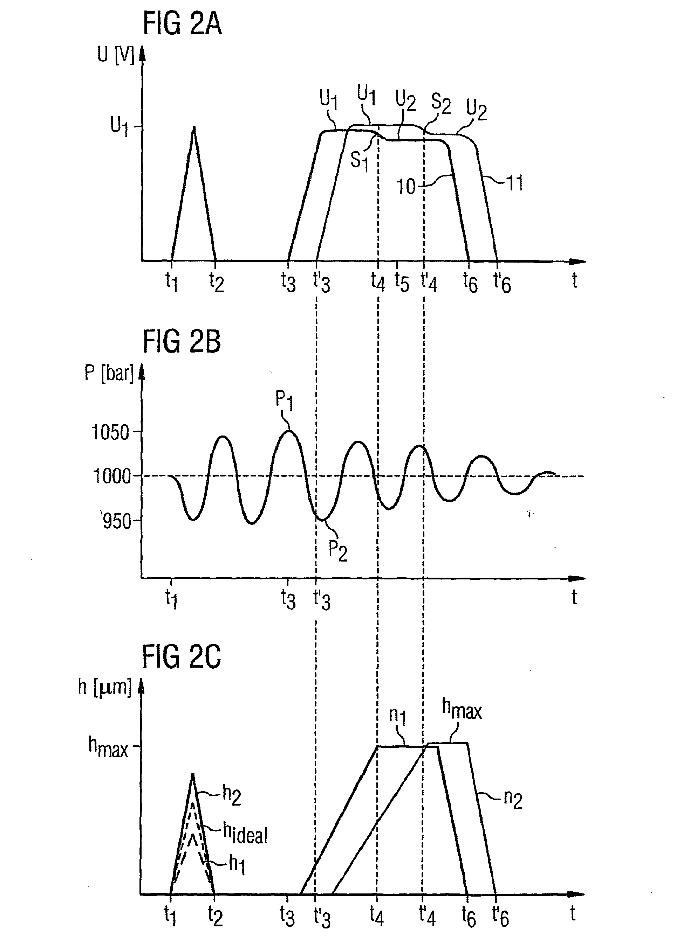

Während des Startes wird in Schritt 1 die Funktion im Steuergerät der Brennkraftmaschine initialisiert. Dabei werden abgespeicherte Adaptionswerte geladen. Nachdem die Initialisierung erfolgt ist, wird in Schritt 2 abgewartet, bis bevorzugte Betriebsbedingungen erreicht sind. Zur weiteren Regelung ist es notwendig, dass sich die Brennkraftmaschine in einem stationären Betriebspunkt befindet. So ist beispielsweise die Last, die Drehzahl, die Kühlwassertemperatur konstant. Nachdem die Aktivierungsbedingungen erfüllt sind, wird die Regelung in Schritt 3 aktiviert. In Schritt 4 werden die Einspritzparameter i eingestellt. Dazu gehören der entsprechende Einspritzdruck und der entsprechende Einspritzzeitpunkt eines entsprechenden Injektors. Nach dem Einstellen des Satzes wird in Schritt 5 die Voreinspritzung zylinderselektiv abgeschaltet. Dabei wird die Ansteuerenergie der Haupteinspritzung derart verändert, um die Fertigungstoleranzen der Injektoren zu eliminieren. Für den jeweiligen Injektor wird dabei die für die Voreinspritzung benötigte Aktorenergie bestimmt. Nach dieser Regelung ist die Voreinspritzung jedes Injektors identisch. Bei der Beschreibung zu Figur 2 wird darauf näher eingegangen. Nach dieser Regelung wird die Voreinspritzung in Schritt 6 wiedereingeschaltet, um die Ansteuerenergie für die Haupteinspritzung bestimmen zu können (Schritt 7). Die Ansteuerparameter werden für die jeweiligen Einspritzparameter als Satz i abgespeichert. Sind die Aktorenergien bzw. die Ansteuerparameter für die verschiedenen Betriebspunkte der Brennkraftmaschine bestimmt worden, so endet die Adaption in Schritt 8.

Die Figur 2 zeigt anhand eines Injektors die Vorgänge beziehungsweise Fehler, die bei lokalen Druckschwankungen auftreten können. Die Zeitachse der Figuren der 2A bis 2C sind identisch.
In Figur 2A wird das Ansteuersignal des Aktors gezeigt. Zwischen den Zeitpunkten t₁, t₂ wird ein erstes Ansteuersignal angelegt, das eine Voreinspritzung auslöst. Ab dem Zeitpunkt t₃ bis zum Zeitpunkt t₆ liegt ein zweites Ansteuerungssignal am Aktor an, das die Haupteinspritzung auslöst. Alternativ dazu kann ein weiteres Ansteuerungssignal von t'₃ bis t'₆ angelegt werden, das einen größeren Separationswinkel aufweist als das zweite Ansteuerungssignal. Der Separationswinkel zwischen Voreinspritzung und Haupteinspritzung wird durch die Zeitdifferenz von t₃ (beziehungsweise t'₃₎ und t₂ gebildet.
Zur besseren Darstellbarkeit wurden die beiden Ansteuerungssignale der Haupteinspritzung übereinander abgebildet. Beide Haupteinspritzungen haben jedoch die gleiche Amplitude. Wie bereits oben erwähnt erzeugt die Voreinspritzung eine lokale Druckschwankung, die in Figur 2B gezeigt ist. Beim Start der Voreinspritzung zumZeitpunkt t₁ reduziert sich der lokale Druck kurzfristig.

Im folgenden werden die beiden Extremfälle beschrieben.

Erster Fall: Der Ansteuerungsbeginn der Haupteinspritzung 10 erfolgt zum Zeitpunkt t₃. Wie in Figur 2B zu erkennen ist liegt in diesem Fall ein Druckmaximum p₁ (von ca. 1050 Bar) an. Dieser erhöhte Druck bewirkt, dass die Nadel des Injektors schneller öffnet. Das zugehörige Nadelhubsignal ist in Figur 2C als Kurve n₁ gezeigt. Nach einem kurzen hydraulischen Verzug beginnt sich die Nadel zu heben. Im Zeitpunkt t₄ hat die Nadel ihren maximalen Hub hₘₐₓ erreicht. Dabei fällt die Spannung U₁ des Ansteuerungssignals 10 auf die Spannung U₂ ab. Dieses Aktorsignal S₁ wird zu früh erzeugt, wobei die Regelung dies als Fertigungstoleranz interpretiert, das heißt, dass dieser Injektor zum Heben der Nadel weniger Energie benötigt statt der tatsächlich erforderlichen Energie. Aufgrund dieser Regelung erhält die Voreinspritzung ein Ansteuerungssignal, das den zu kleinen Nadelhub h₁ erzeugt (siehe Figur 2C).

Zweiter Fall: der Ansteuerungsbeginn der Haupteinspritzung 11 erfolgt zum Zeitpunkt t'₃. Bei diesem Zeitpunkt liegt ein lokales Druckminimum an p₂ (ca. 950 bar). In diesem Fall öffnet sich die Nadel des Injektors langsamer als im obigen Beispiel. Dies ist in Figur 2C zu erkennen, da die Steigung des Nadelhubs n₂ flacher als die von n₁ ist. Die Nadel wird nach einem kurzen hydraulischen Verzug geöffnet bis zu ihrem maximalen Anschlag bei t'₄. Zu diesem Zeitpunkt t'₂ wird das Aktorsignal S₂ erzeugt. Da die Differenz zwischen dem Zeitpunkt t'₄ und t₃ größer ist als die Differenz zwischen t₄ und t₃ ist, interpretiert die Regelung, dass dieser Injektor zum Heben der Nadel mehr Energie benötigt. Aufgrund dieser Regelung wird ein Ansteuerungssignal für die Voreinspritzung erzeugt, das den Nadelhub h₂ bewirkt. Dieser Injektor benötigt jedoch nicht einen Nadelhub von h₁ oder h₂ sondern einen idealen Nadelhub von h_{ideal}, wie in Figur 2C gezeigt ist. Das ideale Ansteuerungssignal für die Voreinspritzung wird dadurch bestimmt, indem das Ansteuerungssignal für die Voreinspritzung abgeschaltet wird, so dass keine lokalen Druckschwankungen erzeugt werden. In diesem Beispiel, beträgt der "normale" Druck 1000 bar.

Die Figur 2 zeigt die starke Abhängigkeit des Separationswinkels zwischen Vor- und Haupteinspritzung, das mit dem erfindungsgemäßen Verfahren vermieden werden kann. Durch das Verfahren der separaten Bestimmung der Aktorenergie für die Vor- und Haupteinspritzung können Einspritzmengeschwankungen, welche durch lokale Druckschwankungen im System verursacht werden, fast vollständig kompensiert werden.

## Patentansprüche

1. Verfahren zur Ermittlung der benötigten Aktorenergien für die verschiedenen Einspritzarten eines Aktors einer Brennkraftmaschine, wobei der Aktor derart mit einem Ansteuersignal beaufschlagt wird, dass dieser ein Aktorsignal (S₁, S₂) erzeugt, wobei ein Einspritzparameter der Brennkraftmaschine derart eingestellt wird, dass das Aktorsignal zum bestimmten hinterlegten Zeitpunkt (t₄, t₄') erzeugt wird, **dadurch gekennzeichnet, dass** die im Verbrennungszyklus erste Einspritzart abgeschaltet wird, um dessen Aktorenergie aus der zweiten Einspritzart zu bestimmen.

2. Verfahren nach Anspruch 1, **dadurch gekennzeichnet, dass** die erste Einspritzart wieder eingeschaltet wird, um für die zweite Einspritzart nötige Aktorenergie zu bestimmen.

3. Verfahren nach Anspruch 2, **dadurch gekennzeichnet, dass** es sich bei der letzten Einspritzart um eine Voreinspritzung, und bei der zweiten Einspritzart, um eine Haupteinspritzung handelt.

4. Verfahren nach mindestens einem der obigen Ansprüche, **dadurch gekennzeichnet, dass** sich die Brennkraftmaschine in einem stationären Betriebszustand befindet.

5. Verfahren nach mindestens einem der obigen Ansprüche, **dadurch gekennzeichnet, dass** nach jedem Regelungsvorgang der Einspritzdruck der Injektoren geändert wird.

6. Verfahren nach mindestens einem der obigen Ansprüche, **dadurch gekennzeichnet, dass** zur Erzeugung des Aktorsignals die Haupteinspritzung verändert wird.

7. Verfahren nach mindestens einem der obigen Ansprüche, **dadurch gekennzeichnet, dass** das Ansteuersignal zum ersten Zeitpunkt (t₃) an den einen Injektor angelegt wird, und dass das Aktorsignal (S₁) nach einer bestimmten Zeit (t₄,t₃) beim zweiten Zeitpunkt (t₄) erzeugt wird.

8. Verfahren nach mindestens einem der obigen Ansprüche, **dadurch gekennzeichnet, dass** bei einer Brennkraftmaschine mit mehrere Injektoren die Differenz der beiden Zeitpunkte (t₃,t₄) eines Injektors gleichgroß ist wie die jeweilige Differenz der beiden Zeitpunkte eines anderen Injektors.

9. Verfahren nach mindestens einem der obigen Ansprüche, **dadurch gekennzeichnet, dass** mindestens einer der folgenden Größen als Einspritzparameter ausgewählt wird: Ladezeit des Ansteuersignals , Amplitude des Ansteuersignals, Ansteuerdauer und die Aktorenergie.

## Claims

1. Method for determining the actuator energy required for the different injection types of an actuator of an internal combustion engine, a control signal being applied to the actuator such that said control signal generates an actuator signal (S₁, S₂) and an injection parameter of the internal combustion engine being set such that said actuator signal is generated at a specific stored time (t₄, t₄'), **characterised in that** the first injection type in the combustion cycle is deactivated in order to determine the actuator energy of said type from the second injection type.

2. Method according to Claim 1, **characterised in that** the first injection type is reactivated in order to determine the actuator energy required for the second injection type.

3. Method according to Claim 2, **characterised in that** the last injection type is an advance injection and the second injection type is a main injection.

4. Method according to at least one of the above claims, **characterised in that** the internal combustion engine is in a stationary operating state.

5. Method according to at least one of the above claims, **characterised in that** the injection pressure of the injectors is changed after each control process.

6. Method according to at least one of the above claims, **characterised in that** the main injection is changed in order to generate the actuator signal.

7. Method according to at least one of the above claims, **characterised in that** the control signal is applied to one injector at the first point in time (t₃), and **in that** the actuator signal (S₁) is generated at the second point in time (t₄) after a specific time (t₄, t₃).

8. Method according to at least one of the above claims, **characterised in that**, in an internal combustion engine with several injectors, the difference in the two points in time (t₃, t₄) of one injector is the same as the respective difference between the two points in time of another injector.

9. Method according to at least one of the above claims, **characterised in that** at least one of the following variables is selected as an injection parameter: loading time of the control signal, amplitude of the control signal, control duration and actuator energy.

## Revendications

1. Procédé pour déterminer l'énergie requise par l'actionneur d'un moteur à combustion interne pour les différents types d'injection, dans lequel l'actionneur reçoit un signal de commande de telle sorte qu'il génère un signal d'actionneur (S₁, S₂), et dans lequel un paramètre d'injection du moteur à combustion interne est établi de telle sorte que le signal d'actionneur est généré à un instant déterminé (t₄, t'₄), **caractérisé en ce que** le premier mode d'injection du cycle de combustion est désactivé pour pouvoir déterminer l'énergie de l'actionneur à partir du deuxième mode d'injection.

2. Procédé selon la revendication 1, **caractérisé en ce que** le premier mode d'injection est réactivé pour déterminer l'énergie requise par l'actionneur pour le deuxième mode d'injection.

3. Procédé selon la revendication 2, **caractérisé en ce que** le premier mode d'injection est une pré-injection et le deuxième mode d'injection une injection principale.

4. Procédé selon au moins une des revendications précédentes, **caractérisé en ce que** le moteur à combustion interne se trouve dans un état de fonctionnement stationnaire.

5. Procédé selon au moins une des revendications précédentes, **caractérisé en ce que** la pression d'injection des injecteurs est modifiée après chaque opération de régulation.

6. Procédé selon au moins une des revendications précédentes, **caractérisé en ce que** l'injection principale est modifiée pour générer le signal d'actionneur.

7. Procédé selon au moins une des revendications précédentes, **caractérisé en ce que** le signal de commande est appliqué à l'injecteur au premier instant (t₃), et que le signal d'actionneur (S₁) est généré après un délai déterminé (t₄, t₃), au deuxième instant (t₄).

8. Procédé selon au moins une des revendications précédentes, **caractérisé en ce que**, sur un moteur à combustion interne à plusieurs injecteurs, la différence entre les deux instants (t₃, t₄) d'un injecteur est de même valeur que la différence entre les deux instants d'un autre injecteur.

9. Procédé selon au moins une des revendications précédentes, **caractérisé en ce qu'**au moins une des grandeurs suivantes est choisie comme paramètre d'injection : temps de chargement du signal de commande, valeur du signal de commande, durée de la commande et énergie de l'actionneur.
